# EUROPÄISCHE PATENTANMELDUNG

(11) **EP 3 000 753 A1**
(43) Veröffentlichungstag der Anmeldung: **30.03.2016**
(21) Anmeldenummer: 14186496.7
(22) Anmeldetag: 26.09.2014
(51) Int. Cl.: B65G 21/06, B65G 23/44, B65G 47/66

(54) **Rollenhalterung für eine Transporteinrichtung**

(71) Anmelder: Mettler-Toledo Garvens GmbH, 31180 Giesen (DE)
(72) Erfinder: Kliefoth, Rüdiger, 30952 Ronnenberg (DE)
(74) Vertreter: Mettler-Toledo

(57) **Zusammenfassung**

Transporteinrichtung (1) zum Transport eines Gegenstandes (G), insbesondere eine Förderbandanlage, welche einen Bandkörper (2) aufweist, an welchem an den in Förderrichtung (F) und entgegen der Förderrichtung (F) sich befindenden Enden jeweils mindestens eine Förderrolle (3) zwischen zwei Kopfstücken (4) des Bandkörpers (2) angeordnet ist. Weiter weist die Transporteinrichtung (1) ein über den Bandkörper (2) und die Förderrollen (3) beweglich angeordnetes als Endlosband ausgestaltetes Transportband (5) auf. Die Erfindung ist dadurch gekennzeichnet, dass zwischen mindestens einer der beiden Förderrollen (3) und einem mit dieser mindestens einen Förderrolle (3) verbundenem Kopfstück (4) jeweils ein Zwischenlagerteil (6) angeordnet ist, wobei die Förderrolle (3) in dem mindestens einen Zwischenlagerteil (6) gelagert ist.

## Beschreibung

Die Erfindung betrifft eine Transporteinrichtung, insbesondere eine Förderbandanlage, welche ein in einer Längsrichtung umlaufendes Transportband zum Transport eines Gegenstandes aufweist und die ihren Einsatz bevorzugt in einem System zum dynamischen Wägen und/oder in Verbindung mit einem Metalldetektionssystem findet.

Solche Einrichtungen zum Fördern von Waren oder Produkten kommen bevorzugt dann zum Einsatz, wenn es gilt, Waren einer Einrichtung in einer Produktionsanlage von einem Ort zum nächsten zu befördern, z.B. zu deren Inspektionsort zuzuführen. Bei der Inspektion kann es sich um eine Wägeeinrichtung zum dynamischen Verwiegen der jeweiligen Ware handeln, auch Kontrollwaagen genannt, oder um eine Einrichtung zum Erkennen von Metallverunreinigungen in den Produkten oder eine Röntgeneinrichtung zum Erkennen verschiedener Verunreinigungen innerhalb der Produkte und dergleichen mehr.

Bei einem genannten Transportband kann es sich zum Beispiel um ein Zufuhrband, ein Abführband oder um ein über eine dynamische Wägeeinrichtung bewegtes Wägeförderband handeln; auch sind Förderbänder, die die Produkte einer Inspektionseinrichtung für die Erkennung von Verunreinigungen zuführen, hier in die Betrachtung mit einzubeziehen. Häufig ist ein Transportband als sogenanntes Endlosband, das heisst als ein in sich geschlossenes Band, ausgestaltet, das über mindestens zwei Förderrollen geführt ist, namentlich eine passive Laufrolle und eine Antriebsrolle, die mit einem Antrieb zum aktiven Antreiben des Transportbandes verbunden ist.

In der Herstellung von pharmazeutischen oder kosmetischen Produkten, Lebensmitteln, Getränken sowie in der Logistikindustrie, chemischen Industrie, Automobilzulieferindustrie, und der metallverarbeitenden Industrie sind Kontrollwaagen ein Schlüsselelement der Qualitätssicherung. Sie verbessern nicht nur die Ausschöpfung der vorhandenen Ressourcen sondern helfen auch nationale Verordnungen, Eichvorschriften und Industrienormen zu erfüllen. Ein effektives Kontrollwägesystem bietet Schutz gegen Produktfehler und senkt die Gesamtbetriebskosten.

Eine dynamische Kontrollwaage ist ein System, das Wägegüter verwiegt, während sie innerhalb einer Produktionslinie über die Waage geführt werden, die Wägegüter in vorgegebene Gewichtszonen klassiert und die Wägegüter entsprechend der Gewichtsklassierung sortiert oder ausschleust. Einsatzgebiete von Kontrollwaagen sind vielseitig und umfassen zum Beispiel:
- Prüfung auf Unter- bzw. Übergewicht von Produkten
- Einhaltung der gesetzlichen Bestimmungen für den Nettoinhalt von verpackten Gütern
- Reduzierung von Produktverschwendungen durch Verwendung der mittels der Kontrollwaage gewonnenen Gewichtswerte zur Einstellung der Füllmaschinen
- Klassierung von Produkten nach Gewicht
- Messung und Aufzeichnung der Leistung der Produktionsanlage bzw. -linie
- Stückzahl-Verifizierung anhand des Gewichts

Mit Kontrollwaagen werden 100% der Produkte einer Produktlinie gewogen. Somit werden dann auch die gesamten Produktionsdaten gesammelt für Produktzählung, Chargennachverfolgung oder für die Produktionsstatistik.

Ein Kontrollwägesystem besteht üblicherweise aus Zuführband, Wägeband, Abführband mit Sortiereinrichtung und Wägeterminal mit Benutzerschnittstelle. Das zwischen Zu- und Abführband gelegene Wägeband ist auf einer Wägezelle gelagert, welche das Gewicht des Produkts beim Überfahren des Wägebandes dynamisch erfasst. Die zwei am häufigsten verwendeten Wägetechnologien für Kontrollwaagen sind Wägezellen mit Dehnungsmessstreifen (DMS) oder nach dem Prinzip der elektromagnetischen Kraftkompensation (EMFR) arbeitende Wägezellen. Nach ihrem Transport über das Wägeband werden die Produkte von einem dem Wägeband nachgeschalteten Abführband abtransportiert. Durch die dynamische Wägung werden fehlgewichtige Produkte erkannt und von einer Aussortiervorrichtung in der Regel quer zu dem in der Längsrichtung stattfindenden Transport der Produkte ausgestossen.

Transporteinrichtungen von oben beschriebener Art bestehen meist aus einem Bandkörper als grundlegender Baugruppe, welche die Dimensionen in der Breite sowie auch in der Länge definieren. Ein Bandkörper besteht üblicherweise aus mindestens zwei sich in Laufrichtung erstreckende seitliche Längsprofile, welche quer zur Laufrichtung durch weitere Profile verbunden sind, um so der Transporteinrichtung deren Stabilität zu verleihen. An den in Laufrichtung entfernten Enden ist jeweils eine Förderrolle angebracht zwischen denen das meist als Endlosband ausgestaltete Transportband eingespannt ist. Die Förderrollen sind in Kopfstücken gelagert, welche entweder Teil der Längsprofile sind oder als Anbauteil fest mit den seitlichen Profilen verbunden sind.

Die Lagerung der Förderrollen ist verantwortlich für eine reibungsarme Bewegung des Transportbandes über den Bandkörper und um die Förderrollen herum. Meist sind sie verantwortlich für eine zunehmende Geräuschentwicklung und einem erhöhten Antriebsenergieverbrauch bei mangelnder Wartung. Deshalb ist es wichtig die Lagerung der Förderrollen periodisch zu kontrollieren, zu schmieren oder zu ersetzen. Dazu muss jeweils die Lagerrolle ausgebaut werden, was zu Ausfallzeiten der Anlage führt.

Der Nachteil heutiger Ausführungen ist, dass bei der Demontage der Antriebsrolle in der Regel der ganze Bandkörper zerlegt werden muss. Das kann bei der Demontage bzw. der Montage beim Kunden zu Problemen führen, weil in der Regel der zur Verfügung stehende Montageplatz in der Nähe des Gerätes nicht vorhanden ist, um die Bandkonstruktion zu montieren. Zudem kann das Demontieren und die anschliessende Montage viel Zeit in Anspruch nehmen.

Aufgabe der Erfindung ist es, eine Transporteinrichtung, insbesondere eine Förderbandanlage, in der Hinsicht zu verbessern, dass eine Förderrolle mit minimalem Aufwand ein- bzw. ausgebaut werden kann. Die bei einem Stillstand einer Transporteinrichtung entstehenden Ausfallzeiten, insbesondere die einer erneuten Ausrichtung bzw. Justierung des Transportbandes, sollen ebenfalls vermindert oder gar vermieden werden.

Diese Aufgabe wird gelöst durch eine Transporteinrichtung zum Transport eines Gegenstandes, insbesondere eine Förderbandanlage, welche einen Bandkörper umfasst, an welchem an den in Förderrichtung und entgegen der Förderrichtung sich befindenden Enden jeweils mindestens eine Förderrolle zwischen jeweils zwei Kopfstücken des Bandkörpers angeordnet sind. Weiter weist die Transporteinrichtung ein über den Bandkörper und die Förderrollen beweglich angeordnetes als Endlosband ausgestaltetes Transportband auf.

Die Erfindung ist dadurch gekennzeichnet, dass mindestens zwischen einer der beiden Förderrollen und mindestens einem mit dieser mindestens einen Förderrolle verbundenem Kopfstück jeweils ein Zwischenlagerteil angeordnet ist, wobei die Förderrolle in dem mindestens einen Zwischenlagerteil gelagert ist. Durch die so geschaffene zweite Lagerung ist ein Aus- bzw. Einbau einer Förderrolle einfacher zu bewerkstelligen. Das Kopfstück bleibt mit dem Bandkörper verbunden und ermöglicht so ein Einbau der Förderrolle ohne nochmaliges Ausrichten der Förderrolle, falls dies schon einmal vorgenommen wurde.

Als Transportbänder werden hier sowohl elastische als auch starre Bänder verstanden. Ebenfalls darunter aufzufassen sind mehrspurige Transportbänder, welche quer zur Transportrichtung unterbrochen, jedoch um die gleichen Förderrollen beweglich angeordnet sind. Ebenfalls denkbar sind Transportbänder bestehend aus Kettengliedern oder sogenannte Raupenbänder.

In einer bevorzugten Ausführungsform der Transporteinrichtung ist das Zwischenlagerteil flach am Kopfstück anliegend und mittels eines Befestigungsmittels festgemacht. Dadurch kann die Förderrolle samt den Zwischenlagerteilen in alle Richtungen parallel zur flachen Kontaktfläche aus der ursprünglichen Betriebsposition entfernt werden. Die Lagerung der Förderrolle verbleibt in den Zwischenlagerteilen.

In einer besonders vorteilhaften Ausgestaltung der Transporteinrichtung ist das Zwischenlagerteil am entsprechenden Kopfstück in einer Führungsnut geführt. Die Führungsnut am Kopfstück gibt der Förderrolle eine zusätzliche Stabilität und ermöglicht ein noch präziseres Positionieren bei einer erneuten Montage der Förderrolle.

In einer weiteren Ausgestaltung ist die Förderrolle entweder eine mit einer am Bandkörper aussenliegend angeordneten Antriebseinheit verbundene Antriebsrolle zum Antreiben des Transportbandes oder eine in einem Drehlager freilaufende Laufrolle. Diese Ausführungsvariante ist besonders kostengünstig und ermöglicht ebenso eine einfache Abschirmung der Antriebseinheit zum Schutz von Personen vor den beweglichen Bauteilen der Antriebseinheit.

Eine vorteilhafte Weiterbildung der Erfindung sieht vor, dass das Kopfstück fest mit dem Bandkörper verbindbar ist und vom Bandkörper durch Entfernen von Befestigungsmitteln demontiert werden kann.

In einer bevorzugten Weiterbildung der Transporteinrichtung weist der Bandkörper mindestens zwei sich in Förderrichtung erstreckende Längsprofile auf. Die Längsprofile können zusätzlich miteinander durch quer zur Förderrichtung erstreckende Querprofile verbunden sein.

In einer weiteren bevorzugter Weiterbildung definiert der Abstand der Aussenkanten der mindestens zwei Längsprofile des Bandkörpers das quer zur Förderrichtung maximale Ausmass des Bandkörpers.

Einem weiteren Erfindungsgedanken trägt die Ausgestaltung der Transporteinrichtung dadurch Rechnung, dass mindestens ein Kopfstück an den in Förderrichtung und entgegen der Förderrichtung sich befindenden Enden der mindestens zwei Längsprofile angeordnet ist.

In einem weiteren Erfindungsgedanken ist mindestens eines der Kopfstücke an den in Förderrichtung und entgegen der Förderrichtung sich befindenden Enden der mindestens zwei Längsprofile angeordneten Querprofilen angeordnet.

Bei einer weiteren Ausführungsform der Erfindung ist an den Zwischenlagerteilen eine Übergabevorrichtung zur Überleitung eines Gegenstandes von einer ersten Transporteinrichtung zu einer anschliessenden zweiten Transporteinrichtung befestigt. Die Übergabevorrichtung weist eine Gleitpatte auf, welche mit den Oberflächen der transportierenden Seite der Förderbänder der ersten Transporteinrichtung und der zweiten Transporteinrichtung eine Ebene bildet. Die Übergabevorrichtung verhindert, dass Gegenstände mit kleiner Grundfläche in den Zwischenraum von zwei aufeinanderfolgenden Transporteinrichtungen gelangen.

Eine Transporteinrichtung sollte so ausgebildet sein, dass auch Gegenstände mit kleiner Grundfläche sicher von einer Transporteinrichtung auf die nächste, anschliessende Transporteinrichtung gelangen können, damit die Fördergegenstände sicher in gerader Linie von einem Transportband zum Anderen weiterbefördert werden, sogar wenn die Gegenstände verhältnismässig klein sind.

Eine Übergabevorrichtung bietet zwei Vorteile. Erstens verhindert Sie Verletzungen des Bedienpersonals, wie das Einklemmen von Fingern, und zweitens ist durch die Übergabevorrichtung ein sanfterer Übergang, d.h. mit geringeren Erschütterungen, eines Gegenstandes G auf ein nachfolgendes Wägeband möglich. Im zweiten Fall kann durch die geringeren Erschütterungen auf dem Wägeband der Durchsatz an Gegenständen G erhöht ober eine qualitativ bessere Messung ermöglicht werden.

In einem Verfahren zum Ein- und/oder Ausbau mindestens einer Förderrolle einer Transporteinrichtung, insbesondere einer Förderbandanlage, wie oben beschrieben werden die folgenden Schritte ausgeführt: Das Transportband wird vom Bandkörper entfernt oder über den Bandkörper angeordnet. Mindestens jene Verbindungen werden gelöst oder angebracht, welche ein Kopfstück und jeweils ein zwischen der Förderrolle und dem Kopfstück angeordnetes Zwischenlagerteil verbindet. Durch weiteres Verschieben der Förderrolle zusammen mit den Zwischenlagerteilen wird die Förderrolle aus dem Bereich zwischen den Kopfstücken entfernt oder in den Bereich zwischen den Kopfstücken eingesetzt. Nun können die Zwischenlagerteile von der Förderrolle entfernt beziehungsweise an der Förderrolle angebracht werden.

In einem weiteren Verfahren wird in einem zusätzlichen Schritt die Bandspannung mittels Betätigung von mindestens zwei Einstellschrauben aufgebracht oder herabgesetzt. Bei Verwendung eines Transportbandes, welches, mindestens in Bezug auf dessen Umfang, elastisch ist erfolgt das Aufbringen oder Herabsetzen der Bandspannung mittels Verschieben der Förderrolle in oder entgegen der Förderrichtung. Das Verschieben erfolgt dabei so weit bis das Zwischenlagerteil am entsprechenden Kopfstück im Wesentlichen vollständig aus oder in die Führungsnut herausgeführt bzw. eingeführt ist.

Bei einer Transporteinrichtung mit Antriebseinheit wird beim Einbau der Antriebsrolle nach dem Anbringen von mindestens den Verbindungen, welche ein Kopfstück und ein Zwischenlagerteil verbinden, und beim Ausbau der Antriebsrolle vor dem Lösen von mindestens den Verbindungen, welche ein Kopfstück und ein Zwischenlagerteil verbinden, die Antriebseinheit von der bzw. an die Antriebsrolle entkoppelt bzw. angekoppelt.

Weist die Transporteinrichtung zusätzlich eine Übergabevorrichtung auf wird im Verfahren zum Ein- und/oder Ausbau mindestens einer Förderrolle zudem die Übergabevorrichtung von bzw. an den Zwischenlagerteilen entfernt bzw. angebracht.

Die Erfindung wird anhand von Beispielen, wie sie stark schematisiert in den Zeichnungen dargestellt sind, im Folgenden beschrieben. Es zeigen:
- Fig. 1: dreidimensionale Ansicht einer Transporteinrichtung gemäss Stand der Technik, mit Unterbau für die Aufnahme einer Wägezelle;
- Fig. 2: dreidimensionale Ansicht einer erfindungsgemässen Transporteinrichtung, ohne Unterbau;
- Fig. 3: dreidimensionale Explosionsansicht auf die Lagerung einer Förderrolle einer erfindungsgemässen Transporteinrichtung, ohne Unterbau.

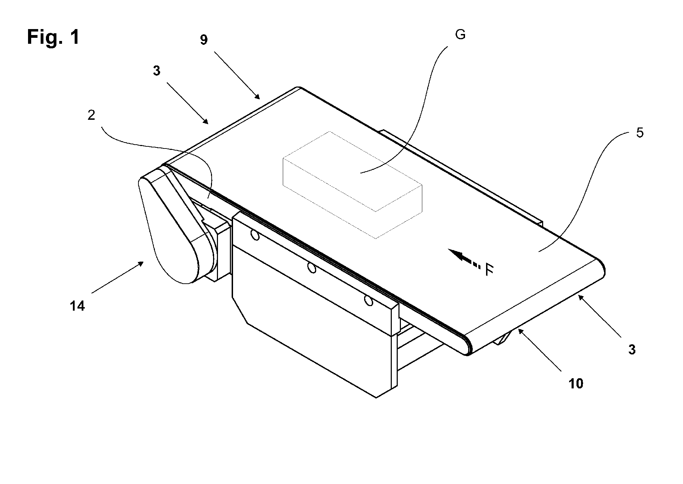

Die Figur 1 zeigt eine Transporteinrichtung 1, wie sie für den Transport von Waren oder Gegenständen G geeignet ist, in einer dreidimensionalen Ansicht. Es handelt sich bei der in der Figur 1 gezeigten Transporteinrichtung um eine solche, die eine Wägezelle zum dynamischen Verwiegen der jeweiligen Ware aufweist. Die Wägezelle ist unterhalb des Bandkörpers 2 angeordnet und durch eine verschliessbare Klappe (hier nicht gezeigt) zugänglich. Da die Wägezelle nicht Gegenstand der Erfindung ist, wird sie hier nicht weiter beschrieben. Anstelle einer Transporteinrichtung mit einer Wägezelle kann es sich bei einer solchen erfindungsgemässen Transporteinrichtung auch um eine Zufuhrbandeinrichtung, eine Abfuhrbandeinrichtung oder um eine Transporteinrichtung mit einer Vorrichtung zum Aussortieren von fehlerhaften Produkten oder um eine solche mit weiteren der Inspektion von Produkten dienenden Einrichtungen, beispielsweise einer Einrichtung zur Detektion von Verunreinigungen in den Produkten und dergleichen mehr handeln.

Die Transporteinrichtung 1 weist eine Antriebseinheit 14 auf, die vermittels einer Abdeckung vollständig gekapselt ist. Die Antriebseinheit 14 ist einerseits mit einem in einem Gehäuse angeordneten Motor, und andererseits mit einer an einem Ende der Transporteinrichtung 1 sich befindenden Förderrolle, namentlich der Antriebsrolle 9 verbunden.

Beim Transportband 5 in Figur 1 kann es sich um ein elastisches Band handeln, das über den Bandkörper 2 und die Förderrollen 3 als sogenanntes Endlosband gespannt ist. Für die hier gezeigte Anordnung ist keine Vorrichtung zur Einstellung der Bandspannung vorgesehen, sondern die Elastizität des Transportbandes 5 ist ausreichend, um selbiges auf die Transporteinrichtung 1 aufzubringen und von dieser wieder, beispielsweise zu Reinigungszwecken, abzunehmen.

Beispielsweise ist durch die Verwendung eines elastischen Transportbandes 5 die notwendige Bandspannung bereits vorgegeben. Ferner ist das Transportband 5 im betriebsbereiten Zustand selbstzentrierend, was ausserdem durch eine leicht ballige Form der jeweiligen Förderrollen 3, das heisst der Antriebsrolle 9 und der Laufrolle 10, unterstützt wird. Daher entfällt das aufwändige Einstellen der Transportbandspannung ebenso wie eine Schrägstellungskorrektur. Es sei jedoch darauf hingewiesen, dass eine Transporteinrichtung 1, die zusätzlich eine Vorrichtung zum Einstellen der Transportbandspannung und Schrägstellungskorrektur aufweist, ebenfalls vom Gedanken der Erfindung umfasst wird.

Zusätzlich sei darauf hingewiesen, dass es sich bei dem Transportband nicht zwingend um ein elastisches Band handeln muss.

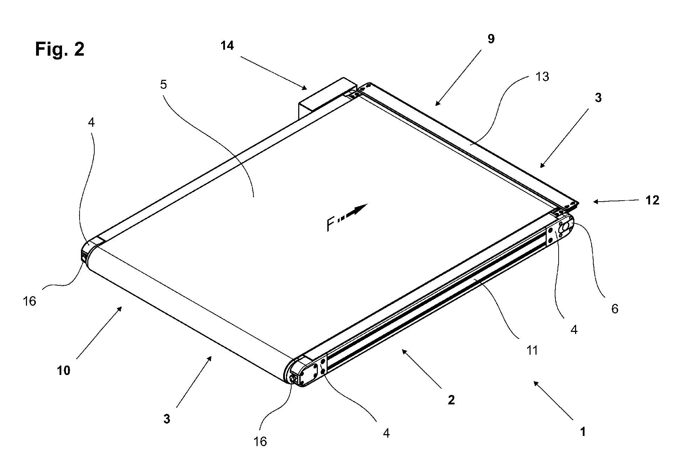

In der Figur 2 ist die erfindungsgemässe Transporteinrichtung 1 in einer dreidimensionalen Ansicht zu sehen. Die hier gezeigte Transporteinrichtung 1 weist an der Laufrolle 10 eine Vorrichtung zum Einstellen der Transportbandspannung und zum Korrigieren der Schrägstellung des Transportbandes auf. Diese Vorrichtung ist in die beiden Kopfstücke 14 integriert, welche an die Längsprofile 11 angebracht sind. In diesen Kopfstücken 14 ist die Laufrolle 10 drehend gelagert, wobei sich durch eine Einstellschraube 16 die Position der Laufrolle 10 verstellen lässt. Wird an beiden Seiten der Laufrolle 10 die Einstellschraube 16 in dieselbe Richtung gleichermassen in Bezug auf Drehrichtung und Drehwinkel betätigt, so wird das Transportband 5 gespannt oder entspannt. Eine Korrektur der Schrägstellung des Transportbandes wird dadurch erreicht, dass die Einstellschrauben 16 unterschiedlich in Bezug auf Drehrichtung und/oder Drehwinkel zueinander gedreht werden. Die Laufrolle 10 wird demnach relativ zur anderen Förderrolle 3, in Figur 2 in der Funktion als Antriebsrolle 9 mit der Antriebseinheit 14 verbunden gezeigt, ausgerichtet.

Die Transporteinrichtung 1 in Figur 2 zeigt am in Förderrichtung liegenden Ende zusätzlich eine Übergabevorrichtung 12. Bestimmt durch den Durchmesser der Förderrollen 3 entsteht zwischen zwei aufeinanderfolgenden Transporteinrichtungen 1 ein Bereich, welcher nicht eben mit der Transportoberfläche ist. Gegenstände G (in Figur 2 nicht gezeigt) welche ein in Förderrichtung F gemessenes, sehr kleines Ausmass aufweisen neigen dazu, in diesen Bereich zu kippen. Die gezeigte Übergabevorrichtung 12 verhindert dies durch eine Gleitplatte 13, die den Bereich überbrückt.

Die Übergabevorrichtung 12 bietet zudem noch zwei weitere Vorteile. Sie verhindert erstens Verletzungen des Bedienpersonals, wie zum Beispiel das Einklemmen von Fingern, und zweitens ist durch die Übergabevorrichtung 12 ein sanfterer Übergang eines Gegenstandes G auf ein nachfolgendes Wägeband und somit eine schnellere und genauere Messung möglich.

Angebracht ist die Übergabevorrichtung 12 an den Zwischenlagerteilen 6, welche am in Förderrichtung F liegenden Ende, zwischen der Antriebsrolle 9 und den Kopfstücken 4 angeordnet sind.

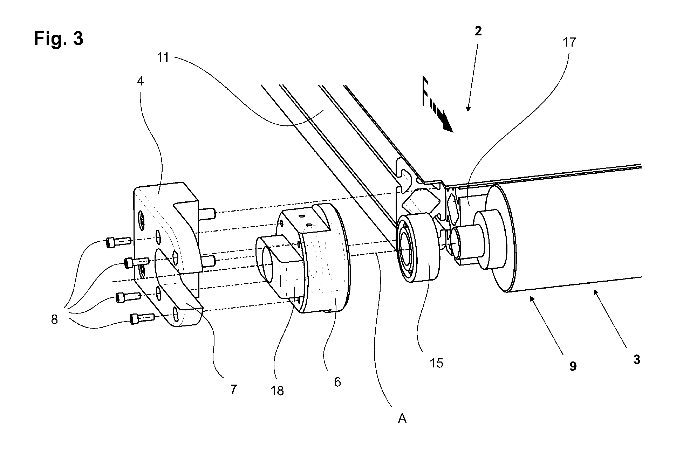

Die in Figur 3 gezeigte Explosionsdarstellung zeigt die Komponenten der Lagerung einer Förderrolle 3 einer erfindungsgemässen Transporteinrichtung 1 entlang einer Achse A. Am äusseren Ende der Antriebsrolle 9 ist ein Lagerzapfen vorhanden auf welchen das Kugellager 15 aufgebracht wird. Das Zwischenlagerteil 6 ist das Gegenstück, mit welchem das Kugellager 15 entlang seines äusseren Durchmessers Kontakt hat. Dies wird in Figur 3 durch die gestrichelten Linien am Zwischenlager 6 angedeutet. Das Zwischenlager 6 wiederum wird am Kopfstück 4 mittels der Befestigungsmittel 8 befestigt. Es sei darauf hingewiesen, dass eine Transporteinrichtung 1, die anstelle eines Kugellagers eine andere Form des Wälzkörpers aufweist (zum Beispiel Zylinderrollen, Tonnen, Nadeln oder dergleichen mehr) oder eine andere Art der Lagerung (zum Beispiel Gleitlager) verwendet, ebenfalls vom Gedanken der Erfindung umfasst wird.

Das Kopfstück wiederum ist, wie Figur 3 zeigt, an ein Querprofil 17 angebracht. Ein Bandkörper definiert durch seine Abmasse im Wesentlichen die Breite und die Förderlänge der Transporteinheit. Der Bandkörper 2 auf Figur 3 umfasst mindestens zwei Längsprofile 11 und mindestens zwei die Längsprofile verbindende Querprofile 17, wobei die Aussenkanten der Längsprofile 11 das maximale Ausmass des Bandkörpers 2 definiert.

Eine Führungsnut 7 verbessert in diesem gezeigten Ausführungsbeispiel zusätzlich die Stabilität und ermöglicht ein noch präziseres Positionieren bei einer Montage der Förderrolle 3. Das Zwischenlagerteil 6 kann jedoch auch eine ebene Fläche, d.h. eine Stirnfläche ohne den in Figur 3 gezeigten in die Führungsnut 7 eingreifenden Vorsatz 18, aufweisen, welche mit dem Kopfstück 4 in Berührung ist, wodurch eine schnellere Montage bzw. Demontage möglich gemacht wird.

Das Zwischenlagerteil 6 in Figur 3 weist eine zur Förderfläche des Transportbandes 5 parallele Fläche mit zwei Gewindebohrungen auf. Hier kann die in Figur 2 gezeigte Übergabevorrichtung 12 montiert werden. Bei einer Montage bzw. Demontage der Förderrolle 3 müssen nur die Befestigungsmittel 8 gelöst werden. Die Zugänglichkeit zum Kugellager 15, und der Montage- bzw. Demontagevorgang werden so wesentlich vereinfacht.

Handelt es sich bei einer Transportanlage 1 um ein elastisches Transportband 5 so kann an beiden Enden - in Förderrichtung F und entgegen der Förderrichtung F - jeweils mindestens ein Zwischenlagerteil 6 angeordnet werden, da die notwendige Bandspannung bereits durch das Transportband 5 vorgegeben ist und nicht durch die Einstellschrauben 6 aufgebracht werden muss.

In den Figuren nicht gezeigt ist ein Ausführungsbeispiel bei welchem die Einstellschraube 16 in einem Zwischenlagerteil 5 integriert ist. Ein Betätigen der Einstellschraube 16 verschiebt das Zwischenlagerteil 5 in der Führungsnut 7 entlang bzw. entgegen der Förderrichtung F.

Anhand der Figur 3 lässt sich auch einfach erläutern wie ein Ausbau beziehungsweise ein Einbau einer Förderrolle 3 von statten geht. Beim Ausbau wird zunächst das Transportband 3 (in Figur 3 nicht gezeigt) entfernt. Als nächstes werden dort die Befestigungsmittel 8 gelöst wo ein Zwischenlagerteil 6 zwischen einem Kopfstück 4 und der auszubauenden Förderrolle 3 angeordnet ist. Bei einer in Figur 3 gezeigten Ausführung wird nun die Förderrolle 3 zusammen mit den Zwischenlagerteilen 6 entlang der Führungsnut 7 soweit verschoben bis sich diese nicht mehr an der Betriebsposition, d.h. in dem Bereich zwischen den Kopfstücken, befinden. Danach werden die Zwischenlagerteile 6 von der Förderrolle 3 entfernt indem diese entlang der Achse A von der Förderrolle 3 weg verschoben werden. Nun kann das Lager 15 auf eine einfache Weise gewartet, d.h. geschmiert, gereinigt oder ersetzt, werden. Für den Einbau der Förderrolle 3 sind die oben erwähnten Schritte in entsprechend in umgekehrter Abfolge abzuhandeln.

Zusätzliche Arbeitsschritte sind abzuhandeln wenn zum Beispiel eine Antriebseinheit 12 seitlich am Bandkörper 2 anliegend ist. Die mit der Antriebseinheit 12 verbundene Antriebsrolle 9 wird beim Ausbau nach dem Entfernen des Transportbandes 5 und vor dem Lösen der Befestigungsmittel 8 von der Antriebseinheit 12 entkoppelt. Weiter kann eine Übergabevorrichtung 12 an den Zwischenlagerteilen 6 angebracht sein, welche vorteilhafterweise dann entfernt wird wenn sich die Förderrolle 3 noch zwischen den Kopfstücken 4 befindet. Wiederum andere Transporteinrichtungen 1 besitzen Einstellschrauben 16 um die Transportbandspannung einzustellen und um eine Korrektur einer Schrägstellung des Transportbandes 5 vorzunehmen. Darum wird bei solchen Transporteinrichtungen 1 bei einem Ausbau einer Förderrolle 3 die Transportbandspannung herabgesetzt um das Transportband 5 vom Bandkörper 2 zu entfernen. Dies geschieht durch eine gleichmässige in Bezug auf Drehrichtung und Drehwinkel gerichtete Betätigung der Einstellschrauben 16 zu beiden Seiten einer Förderrolle 3.

Obwohl die Erfindung durch die Darstellung mehrerer spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden.

### Liste der Bezugszeichen

- 1: Transporteinrichtung
- 2: Bandkörper
- 3: Förderrolle
- 4, 14: Kopfstück
- 5: Transportband
- 6: Zwischenlagerteil
- 7: Führungsnut
- 8: Befestigungsmittel
- 9: Antriebsrolle
- 10: Laufrolle
- 11: Längsprofil
- 12: Übergabevorrichtung
- 13: Gleitplatte
- 14: Antriebseinheit
- 15: Wälzlager
- 16: Einstellschraube
- 17: Querprofil
- 18: Vorsatz
- A: Achse
- F: Förderrichtung
- G: Gegenstandes

## Patentansprüche

1. Transporteinrichtung (1) zum Transport eines Gegenstandes (G), insbesondere eine Förderbandanlage, umfassend
einen Bandkörper (2), an welchem an den in Förderrichtung (F) und entgegen der Förderrichtung (F) sich befindenden Enden jeweils mindestens eine Förderrolle (3) zwischen jeweils zwei Kopfstücken (4) des Bandkörpers (2) angeordnet sind,
und ein über den Bandkörper (2) und die Förderrollen (3) beweglich angeordnetes als Endlosband ausgestaltetes Transportband (5),
**dadurch gekennzeichnet, dass**
zwischen mindestens einer der beiden Förderrollen (3) und mindestens einem mit dieser mindestens einen Förderrolle (3) verbundenem Kopfstück (4) jeweils ein Zwischenlagerteil (6) angeordnet ist, wobei die Förderrolle (3) in dem mindestens einen Zwischenlagerteil (6) gelagert ist.

2. Transporteinrichtung nach Anspruch 1, **dadurch gekennzeichnet, dass** das Zwischenlagerteil (6) flach am Kopfstück (4) anliegt und mittels eines Befestigungsmittels (8) an diesem festgemacht ist.

3. Transporteinrichtung nach einem der Ansprüche 1 oder 2, **dadurch gekennzeichnet, dass** das Zwischenlagerteil (6) am entsprechenden Kopfstück (4) in einer Führungsnut (7) geführt ist.

4. Transporteinrichtung nach einem der Ansprüche 1 bis 3, **dadurch gekennzeichnet, dass** die Förderrolle (3) entweder eine mit einer am Bandkörper (2) aussenliegend angeordneten Antriebseinheit (14) verbundene Antriebsrolle (9) zum Antreiben des Transportbandes (5) oder eine Laufrolle (10) ist.

5. Transporteinrichtung nach einem der Ansprüche 1 bis 5, **dadurch gekennzeichnet, dass** das Kopfstück (4) fest mit dem Bandkörper (2) verbindbar ist und vom Bandkörper (2) durch Entfernen von Befestigungsmitteln (8) demontiert werden kann.

6. Transporteinrichtung nach einem der Ansprüche 1 bis 6, **dadurch gekennzeichnet, dass** der Bandkörper (2) mindestens zwei sich in Förderrichtung (F) erstreckende Längsprofile (11) aufweist.

7. Transporteinrichtung nach Anspruch 7, **dadurch gekennzeichnet, dass** der Abstand der Aussenkanten der mindestens zwei Längsprofile (11) des Bandkörpers (2) das quer zur Förderrichtung (F) maximale Ausmass des Bandkörpers (2) definiert.

8. Transporteinrichtung nach Anspruch 8, **dadurch gekennzeichnet, dass** mindestens der Kopfstücke (4) an den in Förderrichtung (F) und entgegen der Förderrichtung (F) sich befindenden Enden der mindestens zwei Längsprofilen (11) angeordnet ist.

9. Transporteinrichtung nach Anspruch 8, **dadurch gekennzeichnet, dass** mindestens eines der Kopfstücke (4) an den in Förderrichtung (F) und entgegen der Förderrichtung (F) sich befindenden Enden der mindestens zwei Längsprofile (11) angeordneten Querprofilen (17) angeordnet ist.

10. Transporteinrichtung nach einem der Ansprüche 1 bis 9, **dadurch gekennzeichnet, dass** an den Zwischenlagerteilen (6) eine Übergabevorrichtung (12) zur Überleitung eines Gegenstandes (G) von einer ersten Transporteinrichtung (1) zu einer anschliessenden zweiten Transporteinrichtung (1') befestigbar ist, wobei die Übergabevorrichtung (12) eine Gleitpatte (13) aufweist, welche eine Ebene mit den Oberflächen der transportierenden Seite der Förderbänder (5) der ersten Transporteinrichtung (1) und der zweiten Transporteinrichtung (1) bildet.

11. Verfahren zum Ein- und/oder Ausbau mindestens einer Förderrolle (3) einer Transporteinrichtung (1), insbesondere einer Förderbandanlage, nach einem der Ansprüche 1 bis 10
bestehend aus folgenden Schritten:
- Entfernen oder Anordnen des Transportbandes (5) vom bzw. über den Bandkörper (2);
- Lösen oder Anbringen von mindestens den Verbindungen, welche ein Kopfstück (4) und ein zwischen den Förderrollen (3) und Kopfstücken angeordnetes Zwischenlagerteil (6) verbindet;
- Verschieben der Förderrolle (3) und den Zwischenlagerteilen (6) so, dass die Förderrolle (3) aus dem bzw. in den Bereich zwischen den Kopfstücken entfernt oder eingesetzt wird, und;
- Entfernen oder Anbringen der Zwischenlagerteilen (6) von der bzw. an die Förderrolle (3).

12. Verfahren nach Anspruch 11, **dadurch gekennzeichnet, dass** in einem zusätzlichen Schritt ein:
- Aufbringen oder Herabsetzen der Bandspannung mittels Betätigung von mindestens zwei Einstellschrauben (16)
erfolgt.

13. Verfahren nach einem der Ansprüche 11 oder 12, **dadurch gekennzeichnet, dass** das Transportband (5) der Transporteinrichtung (1), mindestens in Bezug auf dessen Umfang, elastisch ist, und wobei das Aufbringen oder Abbauen der Bandspannung mittels Verschieben der Förderrolle (3) in oder entgegen der Förderrichtung (F) erfolgt, wobei das Verschieben so weit erfolgt bis das Zwischenlagerteil (6) am entsprechenden Kopfstück (4) im Wesentlichen vollständig aus oder in die Führungsnut (7) herausgeführt bzw. eingeführt ist.

14. Verfahren nach einem der Ansprüche 11 bis 13, **dadurch gekennzeichnet, dass** beim Einbau der Antriebsrolle (9) nach dem Anbringen von mindestens den Verbindungen, welche ein Kopfstück (4) und ein Zwischenlagerteil (6) verbinden, und beim Ausbau der Antriebsrolle (9) vor dem Lösen von mindestens den Verbindungen, welche ein Kopfstück (4) und ein Zwischenlagerteil (6) verbinden, folgender Schritt ausgeführt wird:
- Entkopplung bzw. Ankopplung der Antriebseinheit (14) von der bzw. an die Antriebsrolle (9).

15. Verfahren nach einem der Ansprüche 11 bis14, **dadurch gekennzeichnet, dass** beim Ein- und/oder Ausbau mindestens einer Förderrolle (3) der Transporteinrichtung (1), folgender Schritt ausgeführt wird:
- Entfernen bzw. Anbringen der Übergabevorrichtung (12) von bzw. an den Zwischenlagerteilen (6).
